# EUROPEAN PATENT SPECIFICATION

(11) **EP 4 168 714 B1**
(45) Date of publication and mention of the grant of the patent: **01.10.2025**
(21) Application number: 21746085.6
(22) Date of filing: 21.06.2021
(51) Int. Cl.: F24D 19/08, B01D 19/00

(54) **A DEAERATOR DEVICE**
ENTLÜFTERVORRICHTUNG
DISPOSITIF DÉSAÉRATEUR

(30) Priority: 19.06.2020 GB 202009425
(43) Date of publication of application: 26.04.2023
(73) Proprietor: Whetstone, Stanley, Selby Yorkshire YO8 5BT (GB)
(72) Inventor: Whetstone, Stanley, Selby Yorkshire YO8 5BT (GB)
(74) Representative: Aldridge, Christopher Simon
(86) International application number: PCT/GB2021/051565
(87) International publication number: WO 2021/255482

(56) References cited:
- DE-A1- 102011 086 096
- GB-A- 2 571 584
- US-A1- 2008 098 893
- US-A1- 2015 321 122

## Description

### Field of the Invention

The invention relates to a deaerator device for removing gasses from liquids, particularly for removing dissolved gasses, such as air, from water in a water heating system.

### Background to the Invention

Water heating systems are employed in both domestic and industrial environments for both supplying hot water and for heating purposes. Water heating systems normally employ a primary heater, often in the form of a gas-fired or oil-fired boiler. Where the water heating system is used for heating a building, water is heated at the boiler and is then dispersed to radiators or other heat emitting elements, which are normally fed with water on a closed loop system.

The water used in such heating systems often contains a significant proportion of air dissolved therein, which can have a detrimental effect on the performance and efficiency of the heating system. Dissolved oxygen in feedwater will cause serious corrosion damage in a boiler by attaching to the walls of metal piping and other equipment and forming oxides, such as rust. Additionally, dissolved carbon dioxide combines with water to form carbonic acid that may cause further corrosion. Therefore, it is desirable to reduce the amount of air dissolved in the water to ensure a more efficient heating system, thereby reducing the amount of fuel required to provide heat to a building.

Previous arrangements have been proposed, such as that disclosed in EP2589885 (Whetstone et al), which describes a deaeration device comprising a vessel having a water-receiving chamber, wherein the chamber has an inlet, and outlet and a vent. The vent in that document is a conduit having an inlet located within the chamber and that is submerged in the water of the deaeration device, when in use. The vent outlet is located externally of the chamber.

D1 - US2015/321122 (Whetstone) - discloses a deaerator device that has a chamber 16 for receiving water, and an outlet 22 through which water can exit the chamber. A vent 24 is provided for gas to exit the chamber, with the vent extending towards the outlet.

D2 - GB2571584 (Vexo) - discloses a deaerator device that has a main chamber with a side-inlet thereto, a lower outlet and a vent in the top surface that extends downwards into the main chamber.

D3 - DE102011086096 (Bosch) - discloses a deaerator device for use with lubricating oil that has an inlet at one side, an outlet at the base and a gas bubble outlet at the top.

### Summary of the Invention

Accordingly, the present invention is directed to a deaerator device as set out in accompanying claim 1. Preferred features are set out in the accompanying sub-claims.

Thus, the deaerator device of the present invention comprises a main chamber having a top surface and arcuate walls tapering inwardly to a narrower bottom surface, the main chamber being provided with a water inlet in fluid communication with a water outlet, wherein:
the water inlet is substantially tangential to the main chamber; and
the water outlet is arranged at the lower end of the main chamber;

wherein the top surface of the main chamber has at least one air outlet aperture;
wherein water flow through the main body is unencumbered by obstacles; and
wherein the internal top surface of the main chamber is substantially flat.

Thus, the present invention differs from the prior art by removing the vent conduit, or "dip tube", of previously proposed devices from the flow path of the water, which, in turn, allows for a more efficient release of air and other gasses from the water passing therethrough. This goes against conventional teaching. The use of a dip tube in the flow path of the water results in the water flow being impeded, thereby reducing the speed of flow of the water and delaying or preventing the formation of an internal vortex within the deaeration device.

The deaerator device of the present invention comprises an air outlet aperture, or vent, to allow the release of air that is removed from the water passing through the deaerator device; however, it is preferable to remove the dip tube completely from the device. In the present invention, the dip tube is shortened to a length at which it does not interfere with the flow of the water through the deaeration device.

The present invention is provided with a substantially flat internal top surface. It has been observed that use of a domed, or 'egg-shaped' internal top surface can lead to the expulsion of water from within the main chamber, through the air outlet; however, where a flat internal top surface is provided, whilst air is vented through the air outlet, the risk of water passing therethrough is significantly reduced and, in some arrangements, prevented. Whilst there might be a slight increase in the space between the water inlet and the top of the main chamber, the majority of the top of the main chamber should, preferably, be substantially flat. The gap between the inlet and the top of the main chamber should be less than half of the diameter of the inlet and, preferably, less than a quarter of the diameter of the inlet, with a particularly advantageous size of less than an eighth of the diameter of the inlet.

The air outlet comprises an air outlet conduit, or tube. The air outlet may be in the form of an air outlet conduit that extends from, or through, the top surface of the main chamber.

In a preferred arrangement, a first end of the air outlet is substantially flush with the internal surface of the top surface of the main chamber. Therefore, the air outlet does not extend a significant length into the main chamber, but stops at, or adjacent to, the internal surface of the top of the main chamber. This ensures that the flow of water through the device is not slowed or impeded by the air outlet conduit.

It has been observed that the use of a parallel-walled dip tube causes turbulence within the flow of water through the deaerator device, which reduces its efficiency. Therefore, where an air outlet conduit, or ventilation conduit, does extend into the main chamber and towards the water outlet thereof, it is advantageous that the diameter of the conduit increases in the direction towards the water outlet, preferably in a non-linear manner.

Thus, the conduit may be flared, preferably with curved walls, so that the end distal from the top surface of the main chamber has a larger diameter than the end proximal the top surface of the main chamber. The flared conduit reduces the risk of the conduit from disrupting the formation of a vortex in the water, during operation. Whilst one might consider making the diameter of the deaeration device larger to accommodate an air outlet conduit with parallel walls, the present invention may, instead, employ a flared conduit. This allows a smaller diameter device to be employed, which accelerates the water passing therethrough faster, thereby creating a bigger pressure drop in the centre of the vortex.

It is preferable that the air outlet is provided with a one-way valve. This reduces the risk of the back-flow of air into the device.

It is particularly advantageous that the water outlet is substantially linear, although it will be appreciated that a slight curve therein. Furthermore, the water outlet is, preferably, at least 200mm long and, more preferably around 300mm long, although it may extend to 600mm, which provides a sufficiently long outlet to ensure that the vortex that is created in the main chamber has sufficient length to extend down the outlet. Having a substantially linear water outlet that leads from the deaerating device to the heating system to which it is connected, and preferably a water outlet that is at least 200mm long, provides sufficient space for the vortex to form and to degas the water effectively. In many installations the water outlet is curved or connected to a curved element, such as an elbow, which reduces the efficiency of the device, particularly as the curve causes turbulence, destabilises the vortex and increases the working pressure. For clarity, it will be appreciated that the water outlet may be integrally formed with the deaerator device, or it may be attached thereto. Hitherto, it has been the case that installers have not appreciated that a 90 degree elbow raised the operating pressure in that locality and that erodes the difference in the respective pressures at the centre and the outside circumference of the vortex. Furthermore, it is preferable to have a maximum of one elbow joint of around 90 degrees between the heat source and the deaerator device. Having a maximum of one elbow therein makes the arrangement more efficient.

In a preferred embodiment, the deaerator device comprises steel and it may be that the device is cast in steel. The use of steel allows the device to metabolise dissolved oxygen, thereby reducing the amount of oxygen in the deaerated water and allowing nitrogen to float freely from the deaerator device by passing the water through the vortex. Whilst it is common practice to simply position an automatic air vent at the highest point in a system, it is more efficient and results in less corrosion to employ the deaerator device of the present invention. Thus, by passing the water through the aerator device of the present invention, the decrease in pressure at the centre of the vortex makes the bubbles of nitrogen to sufficiently large enough to gain buoyancy and therefore to float free against the flow of water. Such a system as set out in the present invention has been shown to achieve a very low level of dissolved air.

It is advantageous that the air outlet is substantially coaxial with the water outlet.

It should be noted that, unlike present devices, the deaerator device of the present invention does not require annual maintenance.

It is preferable that the inlet to the main chamber is positioned wholly in the top third of the main chamber, and, in some arrangements, it may be arranged wholly in the top quarter of the main chamber. Positioning the inlet at such a position increases the speed with which the water passes around the internal surface of the main chamber. By arranging the inlet to the main chamber in this manner, the space available for the above the inlet is significantly reduced, thereby reducing the likelihood of the water moving away from the water outlet at the base of the main chamber. The result of this is that the water moves downwards through the main chamber more quickly, thereby speeding up the deaeration process. This improvement over the existing technology increases the efficiency of the device. Additionally, where the main chamber has a substantially flat top, the space available above the inlet in the main chamber is reduced. The water entering the device flows around the internal surface of the main chamber and creates a vortex. Thus, the water is driven towards the outlet and gas is removed from the water during the process.

The air outlet, is in the form of a tube that extends from the top of the main chamber into the main chamber and towards the outlet. The tube extends to a position less than half of the axial length of the main chamber. This allows the tube to extend to a position to which it does not interfere with the flow of the water passing through the device, during normal operation. Thus, the water flow is unencumbered by the tube.

Hitherto, engineers in the field have been of the thinking, and are taught, that an automatic air vent placed at the highest point in the system will effectively de-aerate the system and prevent corrosion; however, in such an arrangement, heating systems still corrode, due to the action of nitrogen within the system, which, when precipitated out of solution form bubbles that are too small to have natural buoyancy. Thus, in the present invention, by creating a natural pressure drop within the main chamber, or body, of the device, the nitrogen bubbles are able to form in a size that is large enough to float free against the flow of water and thus deaerate in a very effective way from within the centre of the vortex created by the device. Therefore, the present invention is more efficient and reduce the risk of corrosion when compared with existing devices.

### Brief Description of the Drawings

Embodiments of the invention will now be described, by way of example only, and with reference to the accompanying drawings, in which:
Figure 1 shows a first arrangement for reference;
Figure 2 shows a second arrangement that is in accordance with the present invention;
Figure 3 is a graph showing temperature and dissolved oxygen in a deaeration device; and
Figure 4 is a further embodiment of the present invention.

### Detailed Description of Exemplary Embodiments

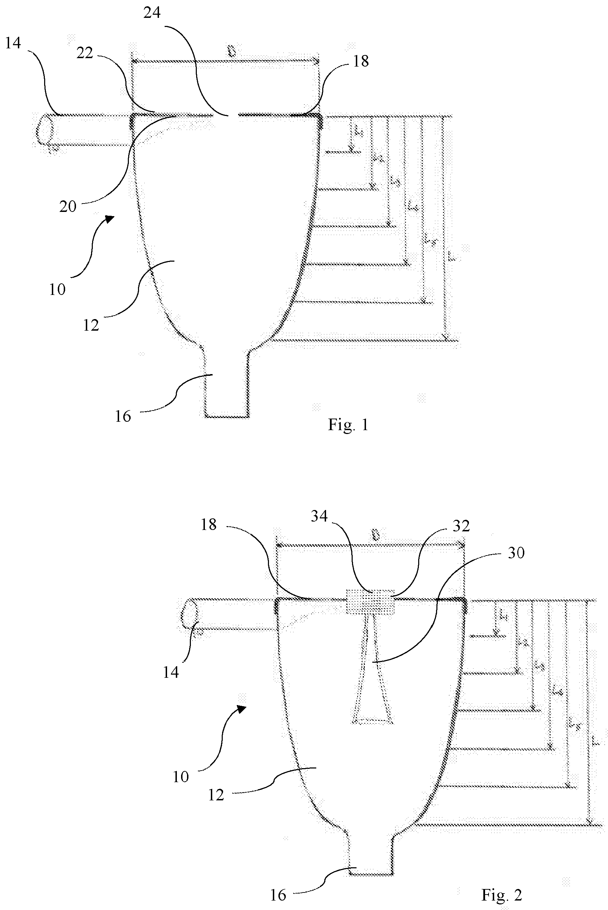

Figures 1 and 2 show an aeration device 10 that comprises an internal main chamber 12 that is provided with an inlet 14 that is arranged substantially perpendicularly to the main chamber 12 and at the top thereof. At the lower end of the main chamber 12, there is a water outlet 16 and the water outlet 16 is in fluid communication with the inlet 14 via the main chamber 12.

At the upper end of the main chamber 12, there is a top surface 18 having an internal face 20 and an external face 22. The internal face 20 of the top surface 18 is substantially flat. An air outlet 24 is located in the top surface 18 and extends therethrough, thereby allowing air to flow from the inside of the main chamber 12 to the outside thereof.

The main chamber 12 is shaped so that its internal surface is contoured to the shape of a lower half of a prolate spheroid, or part ovoid shape, which is to say that it narrows from the inlet 14 to the outlet 16 in an arcuate fashion. In this manner, the curved internal wall of the main chamber 12 has a non-constant radius of curvature which progressively decreases in a direction from the inlet towards the outlet, the vessel having radii of curvature which are positive, taken with reference to a central axis of the deaerator device 10 located within the chamber main chamber 12.

In the embodiment shown in the accompanying figures, the deaerator device 10 may have a maximum outer diameter of 240mm and the thickness of the sidewall 26 may be between 0.75mm and 4mm, but preferably around 1.5mm to 3mm, so the maximum internal diameter of the vessel 16 (and thus the maximum diameter of the main chamber 12) is around 117mm. In the deaerator device 10 shown in the figures, the main chamber 12 has into six sections in planes that are perpendicular to a main longitudinal axis of the device 10. The deaerator device 10 may have a length L between the inlet 14 and the outlet 16 of 110mm, and so lengths L1 to L5 would be, 18.33mm; 36.67mm; 55mm; 73.33mm; and 91.67mm, respectively.

When installed, water enters the main chamber 12 through the inlet 14 and, due to the inlet 14 being substantially tangential to the main chamber 12, the water is directed onto the internal wall of the main chamber 12. Due to the shape of the internal surface of the main chamber 12 and under the force of gravity, the water is directed towards the outlet 16 whilst being accelerated. As the water is rotating around the outside of the main chamber 12, and as the diameter of the chamber decreases towards the outlet 16, a vortex is formed in the water. Due to the water being unencumbered by a dip tube or other obstacles, the vortex is able to form more readily. Thus, as the water rotates and gasses are released therefrom, due to the pressure differential created, and they pass upwards to the air outlet 24. Because the vortex forms quicker than when a dip tube encumbers the flow of water, the present invention results in more efficient degassing of the water and reduces the lag time between starting the water flow and the degassing taking effect, compared with existing systems.

In one arrangement, the volume of the deaerator device 10 is provided as a proportion of the total volume of water in the system in which it is fitted is around 1%, and, preferably, about 0.5%. Such a percentage of the overall water in the system may be beneficial in respect of the performance of the deaerator device 10. Thus, the volume of the main chamber 12 of the deaerator device 10 may be around 400ml.

In the arrangement shown in Figure 2, a ventilation conduit 30 that extends through the top surface 18 of the main chamber 12, thereby providing a ventilation passage for the gasses that are removed from the water. The ventilation conduit 30 extends from the top surface 18 of the main chamber 12 towards the outlet 16; however, it extends to a position within the main chamber 12 wherein it does not interfere with the passage of water through the deaerator device 10.

The ventilation conduit 30 of the deaerator device 10 is shaped so that its internal diameter, through which the gasses pass, increases in a direction towards the outlet 16, thereby having a diameter adjacent the top surface 18 of the main chamber 12 that is less than the diameter of the end of the ventilation conduit 30 that is distal therefrom. In the arrangement in Figure 2, this increase in internal diameter is non-linear, thereby resulting in a flared conduit. One purpose of the non-linear curvature of the internal surface of the ventilation conduit 30 is to prevent the disruption of the forming of the vortex.

The ventilation conduit 30 is fitted to the top surface 18 of the main chamber 12 by way of a threaded connector 32 positioned on the ventilation conduit 30 that engages with a corresponding connection in the top surface 18. An internal threaded connection 34 may be provided within the ventilation conduit 30 to receive a further air outlet conduit (not shown).

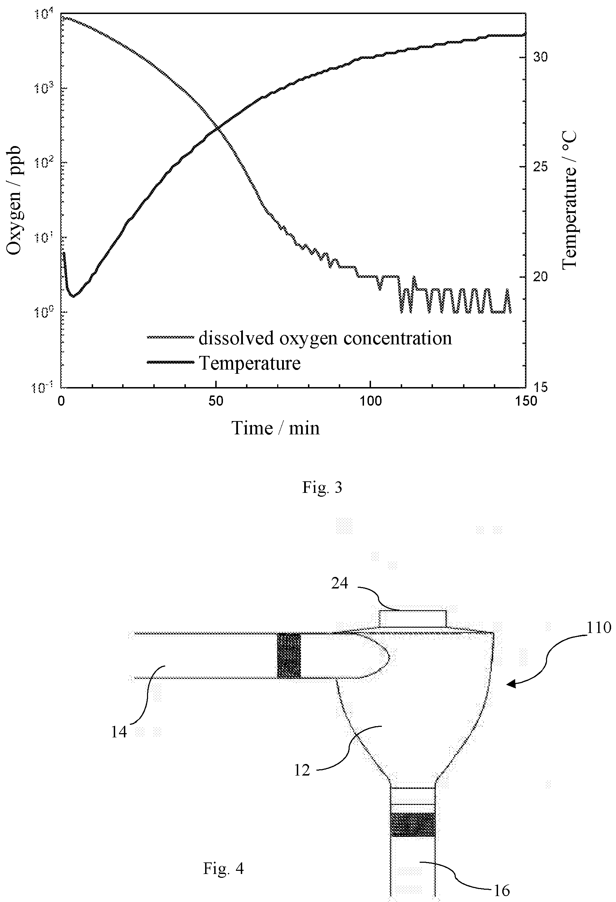

Figure 3 shows the temperature and dissolved oxygen in a deaeration device constructed from steel. Although no heat source was provided, the temperature gradually increased from 20 degrees Celsius to 31 degrees Celsius over 150 minutes. The level of dissolved oxygen decreased from 8.6ppm to 10ppb in 75 minutes, which is considered to be deaerated water, and the dissolved oxygen concentration was undetectable (less than 1ppb) after 150 minutes, thereby indicating that the dissolved oxygen was effectively removed completely. The corrosion of metals and steel in deaerated water is negligible. Thus, where the deaeration device is constructed from steel, it can remove dissolved oxygen from the water. As the device heats the water as the water passes therethrough, the gas more readily released due to the increase in temperature.

Figure 4 shows a further example of a deaerator device 10' according to the present invention. In the device of Figure 4, the inlet 14 is positioned in the top third of the main chamber 12. The outlet 16 is sufficiently long, for example, more than half of the length of the main chamber 12, to allow space for the vortex to extend through the outlet. Again, the diameter of the main chamber 12 decreases over its axial length in a non-linear manner. The outlet 16 may comprise two parts that are connected together via respective threaded portions. Similarly, the inlet 14 may be connected to a water supply using a threaded connection.

The removal of air, particularly nitrogen, from the water passing through the deaerator device is especially useful in creating a more efficient heating system.

The deaerator device may also be used in air-conditioning systems.

One or more features of the described embodiments may, where not otherwise precluded by the claims, be incorporated into another of the described embodiments.

## Claims

1. A deaerator device (10) comprising a main chamber (12) having a top surface (18) and arcuate walls tapering inwardly to a narrower bottom surface, the main chamber (12) being provided with a water inlet (14) in fluid communication with a water outlet (16), wherein:
the water inlet (14) is substantially tangential to the main chamber (12) and is arranged to be wholly within the top third of the main chamber (12); and
the water outlet (16) is arranged at the lower end of the main chamber (16);
whereby the top surface (18) of the main chamber (12) has at least one air outlet (24), **characterized in that**
the at least one air outlet (24) is in the form of a tube that extends from the top of the main chamber into the main chamber and towards the water outlet, and wherein the tube extends to a position less than half of the axial length of the main chamber (12) into the main chamber (12);
wherein the radius of the main chamber (12) reduces in a non-linear manner in the longitudinal axis towards the outlet (16);
wherein water flow through the main chamber (12) is unencumbered by obstacles; and
wherein the top surface (18) of the main chamber (12) is substantially flat.

2. A deaerator device (10) according to claim 1, wherein a first end of the tubular air outlet (24) is substantially flush with the internal surface (20) of the top surface (18) of the main chamber (12).

3. A deaerator device (10) according to claim 2, wherein the diameter of the tubular air outlet (24) increases in the direction towards the water outlet (16).

4. A deaerator device (10) according to any preceding claim, wherein the air outlet (24) is provided with a one-way valve.

5. A deaerator device (10) according to any preceding claim, wherein the water outlet (16) is substantially linear, and the water outlet (16) is at least 200mm in length.

6. A deaerator device (10) according to claim 5, wherein the water outlet (16) is at least 300mm in length.

7. A deaerator device (10) according to any preceding claim, the deaerator device comprises steel.

## Patentansprüche

1. Entlüftervorrichtung (10), umfassend eine Hauptkammer (12) mit einer oberen Oberfläche (18) und gebogenen Wänden, die sich nach innen zu einer schmaleren unteren Oberfläche verjüngen, wobei die Hauptkammer (12) mit einem Wassereinlass (14) in Fluidkommunikation mit einem Wasserauslass (16) bereitgestellt ist, wobei:
der Wassereinlass (14) im Wesentlichen tangential zu der Hauptkammer (12) ist und so angeordnet ist, dass er vollständig innerhalb des oberen Drittels der Hauptkammer (12) liegt; und
der Wasserauslass (16) am unteren Ende der Hauptkammer (16) angeordnet ist;
wobei die obere Oberfläche (18) der Hauptkammer (12) mindestens einen Luftauslass (24) aufweist, **dadurch gekennzeichnet, dass**
der mindestens eine Luftauslass (24) in der Form eines Rohrs vorliegt, das sich von der Oberseite der Hauptkammer in die Hauptkammer und zu dem Wasserauslass hin erstreckt, und wobei sich das Rohr zu einer Position, die weniger als die Hälfte der axialen Länge der Hauptkammer (12) beträgt, in die Hauptkammer (12) erstreckt;
wobei sich der Radius der Hauptkammer (12) in einer nichtlinearen Weise in der Längsachse zu dem Auslass (16) hin verringert;
wobei ein Wasserstrom durch die Hauptkammer (12) nicht durch Hindernisse versperrt ist; und
wobei die obere Oberfläche (18) der Hauptkammer (12) im Wesentlichen flach ist.

2. Entlüftervorrichtung (10) nach Anspruch 1, wobei ein erstes Ende des rohrförmigen Luftauslasses (24) im Wesentlichen bündig mit der inneren Oberfläche (20) der oberen Oberfläche (18) der Hauptkammer (12) ist.

3. Entlüftervorrichtung (10) nach Anspruch 2, wobei der Durchmesser des rohrförmigen Luftauslasses (24) in der Richtung hin zu dem Wasserauslass (16) zunimmt.

4. Entlüftervorrichtung (10) nach einem vorhergehenden Anspruch, wobei der Luftauslass (24) mit einem Einwegventil bereitgestellt ist.

5. Entlüftervorrichtung (10) nach einem vorhergehenden Anspruch, wobei der Wasserauslass (16) im Wesentlichen linear ist und der Wasserauslass (16) mindestens 200 mm lang ist.

6. Entlüftervorrichtung (10) nach Anspruch 5, wobei der Wasserauslass (16) mindestens 300 mm lang ist.

7. Entlüftervorrichtung (10) nach einem vorhergehenden Anspruch, wobei die Entlüftervorrichtung Stahl umfasst.

## Revendications

1. Dispositif désaérateur (10) comprenant une chambre principale (12) comportant une surface supérieure (18) et des parois arquées se rétrécissant vers l'intérieur vers une surface inférieure plus étroite, la chambre principale (12) étant munie d'une entrée d'eau (14) en communication fluidique avec une sortie d'eau (16), dans lequel :
l'entrée d'eau (14) est sensiblement tangentielle à la chambre principale (12) et est agencée pour être entièrement à l'intérieur du tiers supérieur de la chambre principale (12) ; et
la sortie d'eau (16) est disposée à l'extrémité inférieure de la chambre principale (16) ;
moyennant quoi la surface supérieure (18) de la chambre principale (12) comporte au moins une sortie d'air (24),
**caractérisé en ce que** l'au moins une sortie d'air (24) présente la forme d'un tube qui s'étend depuis le sommet de la chambre principale dans la chambre principale et vers la sortie d'eau, et dans lequel le tube s'étend jusqu'à une position à moins de la moitié de la longueur axiale de la chambre principale (12) dans la chambre principale (12) ;
dans lequel le rayon de la chambre principale (12) se réduit de manière non linéaire dans l'axe longitudinal vers la sortie (16) ;
dans lequel un écoulement d'eau à travers la chambre principale (12) n'est pas encombré par des obstacles ; et
dans lequel la surface supérieure (18) de la chambre principale (12) est sensiblement plate.

2. Dispositif désaérateur (10) selon la revendication 1, dans lequel une première extrémité de la sortie d'air tubulaire (24) affleure sensiblement la surface interne (20) de la surface supérieure (18) de la chambre principale (12).

3. Dispositif désaérateur (10) selon la revendication 2, dans lequel le diamètre de la sortie d'air tubulaire (24) augmente dans la direction vers la sortie d'eau (16).

4. Dispositif désaérateur (10) selon une quelconque revendication précédente, dans lequel la sortie d'air (24) est dotée d'une soupape unidirectionnelle.

5. Dispositif désaérateur (10) selon une quelconque revendication précédente, dans lequel la sortie d'eau (16) est sensiblement linéaire, et la sortie d'eau (16) mesure au moins 200 mm de longueur.

6. Dispositif désaérateur (10) selon la revendication 5, dans lequel la sortie d'eau (16) mesure au moins 300 mm de longueur.

7. Dispositif désaérateur (10) selon une quelconque revendication précédente, le dispositif désaérateur comprend de l'acier.
